# EUROPEAN PATENT APPLICATION

(11) **EP 1 583 003 A2**
(43) Date of publication of application: **05.10.2005**
(21) Application number: 05251829.7
(22) Date of filing: 24.03.2005
(51) Int. Cl.: G06F 17/30

(54) **XML path queries**

(30) Priority: 02.04.2004 US 558549 P; 09.09.2004 KR 2004072074
(71) Applicant: SAMSUNG ELECTRONICS CO., LTD., Gyeonggi-do (KR)
(72) Inventor: Shin, Seong-kook, Seocho-gu, Seoul (KR); Choi, Hyok-sung, Dongan-gu, Anyang-si, Gyeonggi-do (KR)
(74) Representative: Waddington, Richard

(57) **Abstract**

A method and apparatus are provided for easily and quickly searching for a specific element (or a node) in a document (303) or a library complying with an XML format by using tree path information based on a predetermined syntax, and a recording medium (304) having a program to implement the method. The method includes: parsing tree path information based on a predetermined syntax if tree path information of an element is input; and searching a document or library for the element according to the parsing result.

## Description

The present invention relates to an element search, and more particularly, to a method and apparatus for searching a predetermined element (or a node) in a document or a library complying with an extensible markup language (XML) format, and a recording medium storing a program for implementing the method.

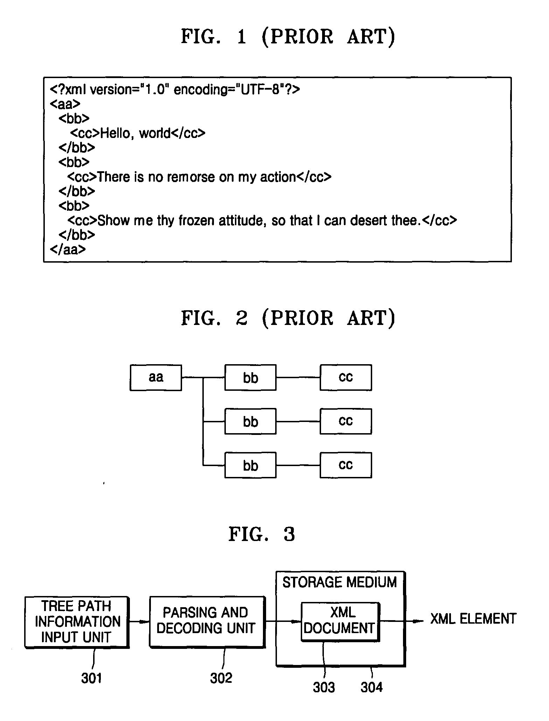

FIG. 1 illustrates an example of an XML document, and FIG. 2 is a tree diagram of the XML document of FIG. 1. In the XML document shown in FIGS. 1 and 2, a root element "aa" includes three "bb" child elements (or child nodes), and each "bb" child element includes one "cc" child element.

In order to search this XML document for a predetermined element, a search path should be described as a sentence. For example, if searching for "cc" element of the second "bb" child element of root element "aa" shown in FIG. 2 is desired, a search path should be described in a sentence as shown in Table 1:

**Table 1**

| | |
|---|---|
| Search path | Search of element "cc" of second child element "bb" of root element "aa" |

Then, by using information obtained by decoding the search path described as in the above sentence, the desired element is searched for in the XML document.

Accordingly, since whenever an element search is desired in an XML document or a library, a user should describe the search path of an element desired to be detected as a sentence as described above, and the search path described as a sentence should be parsed and decoded, the process for searching for a desired element in an XML document or a library is annoying and complicated.

The present invention provides a method and apparatus for easily searching for a desired element in a document or a library, and a recording medium storing a program for implementing the method.

The present invention provides a method and apparatus for easily searching for a predetermined element (or node) in a document or a library complying with an XML format, and a recording medium storing a program for implementing the method.

The present invention provides a method and apparatus for easily and quickly searching for a predetermined element (or node) in a document or a library complying with an XML format by using tree path information based on a predetermined syntax, and a recording medium storing a program for implementing the method.

According to an aspect of the present invention, there is provided a method for searching for an element from a document or library, including: parsing tree path information of the element based on predetermined syntax if tree path information of the element is input; and searching a document or library for the element according to the parsing result.

The tree path information may have a character string based on the predetermined syntax.

The predetermined syntax may be defined such that the tree path information is described as any one of a character string in which a term and a stem are described between symbols distinguishing elements, a character string which is described in order of the symbol, the term and the stem, and a character string which is described in order of the term and the stem.

The predetermined syntax may be defined such that the stem is described as any one of a character string which is described in order of the symbol, the term, and the stem and a character string or a symbol indicating null.

The predetermined syntax may be defined such that the term is described as any one of a character string indicating an element name, a character string or a symbol indicating a specified range, a character string described in the form of name space prefix : element name, a character string described in the form of a symbol indicating a specified range : element name, and a character string described in the form of a symbol indicating a specified range : a character string or a symbol indicating a specified range.

The predetermined syntax may be defined such that the character string indicating a specified range is described as any one of "{" specified range (range)"} and a character string or symbol indicating null.

The specified range may include array order information of the element desired to be searched for in an upper layer element corresponding to the element desired to be searched for.

With the symbol as a base, a character string described before the symbol may indicate an upper layer element of a character string described after the symbol.

According to another aspect of the present invention, there is provided a method for searching for an element in an extensible markup language (XML) format based document or library, including: if tree path information of the element is input, parsing the tree path information based on a predetermined syntax and detecting location information of at least one element; decoding the detected location information; and searching the document or library for the element according to the decoded result.

According to still another aspect of the present invention, there is provided an apparatus for searching an element from an XML format based document or library, the apparatus comprising: a storage medium storing the document or library; and a parsing and decoding unit parsing tree path information of the element based on predetermined syntax if the tree path information of the element is input, and providing a search request signal for the element based on the parsing result to the storage medium.

According to still another aspect of the present invention, there is provided a computer readable recording medium having embodied thereon a computer program for executing a method of searching for an element from a document or library, the method comprising: parsing tree path information of the element based on a predetermined syntax if tree path information of the element is input; and searching a document or library for the element according to the parsing result.

For a better understanding of the invention, and to show how embodiments of the same may be carried into effect, reference will now be made, by way of example, to the accompanying diagrammatic drawings in which:
FIG. 1 illustrates an example of an XML document;
FIG. 2 is a tree diagram of the XML document of FIG. 1;
FIG. 3 is a functional block diagram of an element search apparatus according to an exemplary embodiment of the present invention;
FIG. 4 illustrates an example of syntax definition of an XML tree path according to an embodiment of the present invention;
FIGS. 5A through 5H illustrate examples of tree diagrams of elements searched for by tree paths defined in Table 2; and
FIG. 6 is a flowchart of operations of an element search method according to a preferred embodiment of the present invention.

The present invention will now be described more fully with reference to the accompanying drawings, in which exemplary embodiments of the invention are shown.

Referring to FIG. 3, an element search apparatus according to an embodiment of the present invention includes a tree path information input unit 301, a parsing and decoding unit 302, and a storage medium 304 storing an XML document 303.

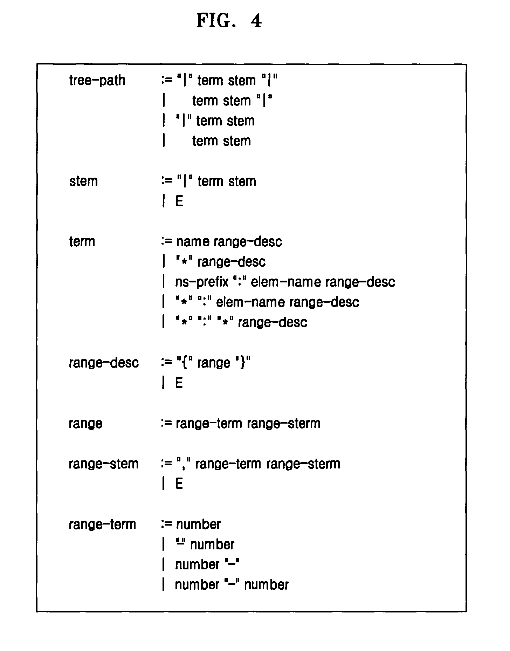

The tree path information input unit 301 is formed such that tree path information based on a predetermined syntax can be input by a user. The predetermined syntax can be defined in a similar form to Backus-Naur Form (BNF) syntax as shown in FIG. 4.

That is, in FIG. 4, ':=' means "to define", and indicates that a nonterminal described at the left hand side of ':=' is defined by a symbol or/and a character string shown at the right hand side of ' : =' .

Accordingly, referring to FIG. 4, tree path information can be described by any one of a character string described in order of a term and a stem between two "|" symbols distinguishing elements ("|" term stem "|"), a character string described in order of a term, a stem, and the symbol (|) (term stem "|"), a character string described in order of the symbol (I), a term, and a stem ("|" term stem), and a character string described in order of a term and a stem.

A stem included in tree path information can be described as any one of a character string described in order of the symbol, a term, and a stem ("|" term stem), and a character string or symbol (E) meaning null, as defined in FIG. 4. Because of the stem, tree path information can be defined as having a repetitive form.

A term included in tree path information can be described as any one of a character string indicating an element name (name range-desc), a character string or a symbol indicating a specified range ("*" range-desc), a character string described in a name space prefix: element name (ns-prefix ":" elem-name range-desc) form, a character string described in the form of a symbol indicating a specified range : an element name ("*" ":" element-name range-desc), and a character string described in the form of a symbol indicating a specified range: a character string or a symbol indicating a specified range ("*"":""*" range-desc).

The character string (range-desc) indicating the specified range in the tree path information can be described as any one of "{"range"}" and a character string or a symbol (E) meaning null.

Also, the range can be described in the form of "range-term range-stem". The range-stem can be described as any one of "," range-term range stem and a symbol (E) indicating null, as defined in FIG. 4. The range-term can be described as number, "-"number, number"-", and number"-"number formats. The number complies with normal decimal number syntax.

Based on the syntax defined in FIG. 4, XML tree path information having meanings as shown in Table 2 can be input by the tree path information input unit 301.

**Table 2**

| XML tree path information | Meaning |
|---|---|
| I aa I bb{3-} I | "aa" is a root element. The first and second "bb" name child elements included in "aa" root element are ignored and the third "bb" name child element is indicated. |
| \| a:b \| a:c \| | A "c" name child element of a "b" element having "a" as a prefix of the name space is indicated. "a:b" is a root element. |
| \| aa \| *{3} \| | The third child element of "aa" element is indicated and that the name of an element is not important is indicated. "aa" is a root element. |
| \| a \| * I | All child elements of "a" element are indicated and "a" is a root element. The name of a child element is not important. For example, \| a \| b \| , \| a \| d \| and \| a \| any \| are allowable but \| a \| b \| c \| is not. |
| \| a \| * | All descendant elements of "a" element are indicated. "a" is a root element. All child elements having "a" element as a direct or indirect ancestor are indicated in addition to direct child elements of "a" element. |
| I *:a \| *:b{2} \| * | "a" is a root element and the name of a prefix is not important. All child elements of the second "b" name child element of "a" element are indicated. |
| * \| a \| b \| | Elements having a direct parent with name "a" and having "b" as a first node are indicated. The parent of "a" element is not important. |
| a \| b \| | Elements as child elements of a first "a" element that is the child of an arbitrary base element and having "b" as the first node name are indicated. |
| ... | |

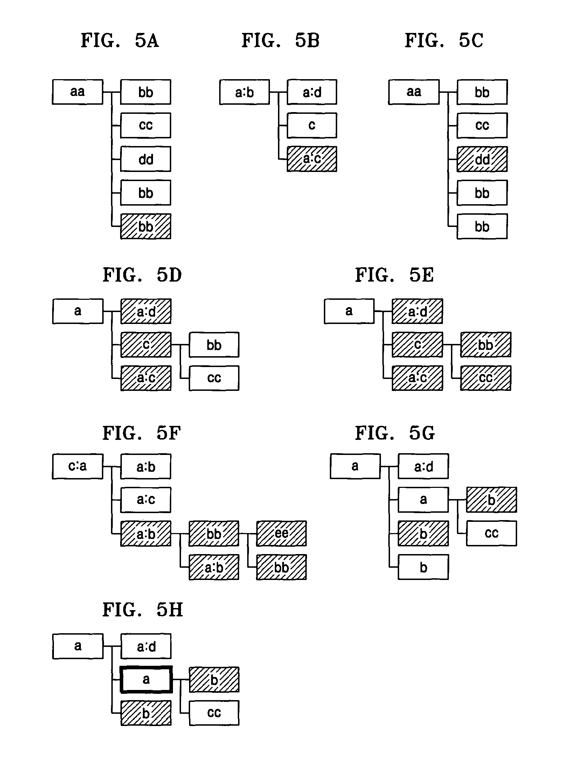

Tree diagrams of XML elements that can be output from the storage medium 304 according to respective XML tree paths defined in Table 2 are as shown in FIG. 5.

That is, FIG. 5A is the tree diagram example of tree path | aa | bb{3-} | of Table 2. FIG. 5B is the tree diagram example of tree path I a:b I a:c I of Table 2. FIG. 5C is the tree diagram example of tree path | aa | * {3} | of Table 2. FIG. 5D is the tree diagram example of tree path | a | * | of Table 2. FIG. 5E is the tree diagram example of tree path | a | * of Table 2. FIG. 5F is the tree diagram example of tree path | *:a | * : b { 2 } | * of Table 2. FIG. 5G is the tree diagram example of tree path * | a | b | of Table 2. FIG. 5H is the tree diagram example of tree path a | b | of Table 2.

In addition to tree path information defined in Table 2, tree path information as | aa | bb{2} | cc | can be input. This tree path information indicates a "cc" child element of the second "bb" name child element of "aa" element. If {...} information is omitted in the tree path information, the tree path information is treated the same as {1} is input. {1} means the first child element (or node) of a corresponding name. The number written inside { } is array order information on an element desired to be searched for among child elements having an identical name included in an upper layer element corresponding to the element desired to be searched for.

Also, tree path information including a range on the element desired to be searched for can be input as I aa | bb{1-3} | based on the syntax defined in FIG. 4 in addition to the forms defined in Table 2. The tree path information indicates searching from the first child elements to the third child elements with name "bb" of "aa" element. The tree path information including the range for the element desired to be searched for can be input as I aa I bb{1, 2, 3} I.

In this tree path information, "|" symbol is a meta symbol to distinguish elements, and with the symbol as a basis, a character string written before the symbol indicates an upper layer element of a character string written after the symbol. For example, in tree path information | aa | bb |, "aa" element is an upper layer element of "bb" element.

If the tree path information based on the predetermined syntax as described above is input, the parsing and decoding unit 302 parses the input tree path information based on the predetermined syntax and detects the location of the element desired to be searched for in the XML document 303 stored in the storage medium 304. The detected result is decoded. The decoded result is provided to the storage medium 304. The decoded result is a search request signal for the element desired to be searched for.

The storage medium 304 searches for the XML element from the XML document 303 based on the input search request signal, and outputs the XML element. The XML element is searched for by tracking a tree path as illustrated in FIGS. 5A through 5H.

The storage medium 304 can store a library complying with an XML format and according to the search request signal, can search for the XML element included in the library and output it. The storage medium 304 can be any one of, for example, a memory, a memory stick, an optical disc, and a hard disc.

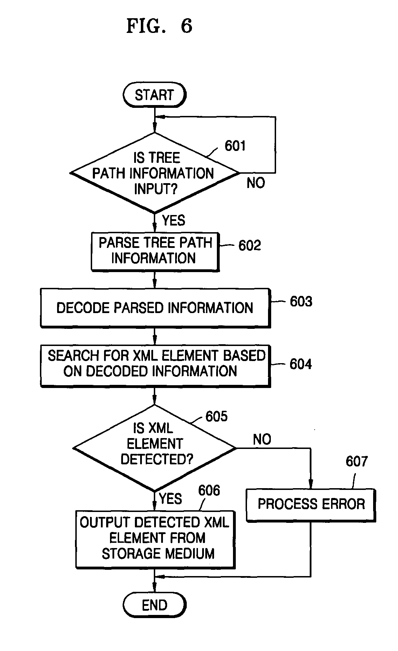

FIG. 6 is a flowchart of operations of an element search method according to an embodiment of the present invention.

If it is determined that tree path information based on the syntax as described above in the tree path information input unit 301 is input in operation 601, the input tree path information is parsed based on the syntax in operation 602. According to the parsing, the location of an element desired to be searched for from an XML document or library is detected. That is, in the parsing, the location of a symbol distinguishing elements, which information is included in element information described before the symbol (for example, the name of an element) with the symbol as a base, and which information is included in element information described after the symbol with the symbol as a base are parsed and the name of the element desired to be searched for, the parent element (or an upper layer element) of the element desired to be searched for, a search range of the element, and so on are determined.

The parsed information is decoded into a search request signal in operation 603. The search request signal includes location information of the element desired to be searched for. Based on the decoded information, an XML element is searched for in an XML document or library in operation 604. If the XML element is detected, the detected XML element is read from the storage medium 304 and output in operations 605 and 606. However, if the XML element is not detected, error processing is performed in operations 605 and 607.

The search method for detecting an element in an XML document or library as described above can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet).

The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

In the present invention as described above, an element in a predetermined location of an XML document or library is searched for by using tree path information based on predetermined syntax, such that the desired element can be detected easily and quickly.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclos

## Claims

1. A method of searching for an element from a document or library, the method comprising:
parsing tree path information of the element based on a predetermined syntax if tree path information of the element is input; and
searching a document or library for the element according to the parsing result.

2. The method of claim 1, wherein the tree path information has a character string based on the predetermined syntax.

3. The method of claim 2, wherein the predetermined syntax is defined such that the tree path information is described as any one of a character string in which a term and a stem are described between symbols distinguishing elements, a character string which is described in order of the symbol, the term and the stem, and a character string which is described in order of the term and the stem.

4. The method of claim 3, wherein the predetermined syntax is defined such that the stem is described as any one of a character string which is described in order of the symbol, the term, and the stem and a character string or a symbol indicating null.

5. The method of claim 4, wherein the predetermined syntax is defined such that the term is described as any one of a character string indicating an element name, a character string or a symbol indicating a specified range, a character string described in the form of name space prefix : element name, a character string described in the form of a symbol indicating a specified range : element name, and a character string described in the form of a symbol indicating a specified range : a character string or a symbol indicating a specified range.

6. The method of claim 5, wherein the predetermined syntax is defined such that the character string indicating a specified range is described as any one of "{" specified range (range)"} and a character string or symbol indicating null.

7. The method of claim 6, wherein the specified range includes array order information of the element desired to be searched for in an upper layer element corresponding to the element desired to be searched for.

8. The method of any one of claims 3 to 7, wherein with the symbol as a base, a character string described before the symbol indicates an upper layer element of a character string described after the symbol.

9. A method of searching for an element in an extensible markup language (XML) format based document (303) or library, comprising:
if tree path information of the element is input, parsing the tree path information based on predetermined syntax and detecting location information of at least one element;
decoding the detected location information; and
searching the document (303) or library for the element according to the decoded result.

10. The method of claim 9, wherein the tree path information is described as a character string based on the predetermined syntax.

11. An apparatus for searching an element from an XML format based document (303) or library, comprising:
a storage medium (304) for storing the document or library; and
a parsing and decoding unit (302) for parsing tree path information of the element based on predetermined syntax if the tree path information of the element is input, and providing a search request signal for the element based on the parsing result to the storage medium.

12. The apparatus of claim 11, wherein the tree path information is described as a character string based on the predetermined syntax.

13. A computer readable recording medium having recorded thereon a computer program for executing a method of searching for an element from a document or library, the method comprising:
parsing tree path information of the element based on a predetermined syntax if tree path information of the element is input; and
searching a document or library for the element according to the parsing result.
